# EUROPÄISCHE PATENTANMELDUNG

(11) **EP 2 517 585 A1**
(43) Veröffentlichungstag der Anmeldung: **31.10.2012**
(21) Anmeldenummer: 12165683.9
(22) Anmeldetag: 26.04.2012
(51) Int. Cl.: A41D 13/01, A41D 31/00, G02B 5/126

(54) **Reflexstreifen**

(30) Priorität: 28.04.2011 AT 2412011 U
(71) Anmelder: Schneider, Otmar, 5020 Salzburg (AT)
(72) Erfinder: Schneider, Otmar, 5020 Salzburg (AT)
(74) Vertreter: Babeluk, Michael

(57) **Zusammenfassung**

Die Erfindung betrifft einen Reflexstreifen (10) zum Anbringen an einem Grundmaterial, insbesondere an einer Schutzbekleidung für Einsatzkräfte, wobei der Reflexstreifen (10) einen Grundstreifen (1) aus einem schwer entflammbaren, fluoreszierendem Gewebe mit hoher Atmungsaktivität aufweist, und in dem Grundstreifen (1) zumindest in einem Teilbereich der Fläche zumindest ein Bereich, insbesondere ein Streifen (2) aus retroreflektierendem Material eingearbeitet ist.

## Beschreibung

Die Erfindung betrifft einen Reflexstreifen zum Anbringen an einem Grundmaterial, insbesondere an einer Schutzbekleidung für Einsatzkräfte, wobei der Reflexstreifen einen Grundstreifen aufweist. Des Weiteren betrifft die Erfindung eine Schutzbekleidung aus atmungsaktivem Grundmaterial mit einem fest darauf angebrachten Reflexstreifen.

Einsatzkräfte, wie Feuerwehren und dergleichen, tragen eine Schutzkleidung, die primär die Aufgabe hat, den Körper vor der Einwirkung von Hitze oder gefährlichen Medien zu schützen. Eine weitere Aufgabe der Schutzkleidung ist es, eine gute Sichtbarkeit der betreffenden Person zu gewährleisten, um auch unter schwierigsten Bedingungen den optischen Kontakt zur betreffenden Person aufrechterhalten zu können. Es gibt daher gesetzliche Vorschriften über die Anbringung und die Mindestmenge und Mindestanforderungen von speziellen Markierungen auf der Schutzkleidung, um dies zu gewährleisten. Diese Anforderungen sind beispielsweise in der europäischen Norm EN 471 in der geltenden Fassung zusammengefasst. Diese Markierungen bestehen in der Regel aus zwei unterschiedlichen Materialien, nämlich einerseits aus retroreflektierenden Materialien, die in der Regel in silberfarben oder gelb ausgeführt sind, und fluoreszierende Hintergrundmaterialien, die üblicherweise gelb ausgeführt sind. Es sind aber auch rote und orange Materialien in Verwendung. Derartige Reflexstreifen können beispielsweise der AT 504.357 B1 des Anmelders entnommen werden. Es können aber auch Materialien mit kombinierten Eigenschaften zur Anwendung kommen, insbesondere Materialaufbauten, die in sich retroreflektierend und fluoreszierend sind, oder mit fluoreszierendem Hintergrund und darauf aufgebrachten retroreflektierenden Materialien. Der retroreflektierende Streifen ist hierbei üblicherweise auf den Grundstreifen aufgenäht, aufgedampft oder aufgeklebt, wodurch er besonders anfällig für Verschleiß und Abrieb ist.

Es ist daher Aufgabe der Erfindung, Reflexstreifen bereitzustellen, die weniger verschleißanfällig und einfach an der Oberbekleidung anzubringen sind. Des weiteren müssen diese Reflexstreifen die gesetzlichen Vorgaben erfüllen.

Diese Aufgabe wird erfindungsgemäß dadurch gelöst, dass in dem Grundstreifen zumindest in einem Teilbereich der Fläche zumindest ein Bereich, insbesondere ein Streifen aus retroreflektierendem Material eingearbeitet ist.

Besonders bevorzugt ist hierbei vorgesehen, dass der zumindest eine Bereich auf- oder eingewoben, ein- oder aufgestickt oder eingenäht ist. Damit ist der retroreflektierende Streifen im wesentlichen in der Ebene des Grundstreifens angeordnet und ragt nicht aus dessen Ebene hervor, wodurch die Verschleißfestigkeit des erfindungsgemäßen textilen Reflexstreifens wesentlich verbessert wird.

Wird der Reflexstreifen als beispielsweise bandförmiges Material hergestellt, das auf den Oberstoff einer Schutzbekleidung aufgenäht werden soll, so ist besonders bevorzugt vorgesehen, dass im Bereich zumindest einer Kante des Grundstreifens zumindest ein Verstärkungselement angeordnet ist. Dieses Verstärkungselement bewirkt eine - im Querschnitt gesehene - Erhöhung des Grundstreifens, während die zu schützende Naht, mit der der Reflexstreifen beispielsweise mit dem Oberstoff der Schutzbekleidung vernäht ist, an der Basis dieser Erhöhung angebracht ist. Diese Erhöhung bewirkt nun, dass die auf die Schutzkleidung einwirkenden Umwelteinflüsse, insbesondere mechanische Kräfte, von der den Reflexstreifen befestigenden Naht ferngehalten werden.

In diesem Zusammenhang wird darauf hingewiesen, dass unter "Reflexstreifen" nicht nur streifenförmige Markierungen, sondern auch Markierungen mit gekrümmten Kanten, beispielsweise kreis- oder ellipsenförmige Abzeichen zu verstehen sind.

Bevorzugterweise ist vorgesehen, dass das zumindest eine Verstärkungselement Teil des hierbei einlagig ausgeführten Grundstreifens ist und durch eine spezielle Verarbeitung beispielsweise in Form einer Verdickung durch Verwendung stärkerer und/oder anderer Garne oder spezieller Webtechniken bei der Herstellung des Grundstreifens erhalten wird. Dies erleichtert insbesondere das Anbringen des erfindungsgemäßen Reflexstreifens auf der Schutzbekleidung.

Alternativ hierzu ist das Verstärkungselement schnurartig, zum Beispiel als Kordel oder in Form einer anderen Verdickung ausgebildet. Dadurch wird eine wulstartige Erhöhung der Kante bewirkt, wodurch die den Reflexstreifen befestigende Naht besonders gut geschützt ist.

Bei der Herstellung des erfindungsgemäßen Reflexstreifens ist in einer weiteren Ausführung der Erfindung vorgesehen, dass das Verstärkungselement direkt bei der Herstellung in das Material des Grundstreifens eingebettet oder integriert, insbesondere eingewebt wird.

In einer weiteren Ausführung der Erfindung ist vorgesehen, dass der Grundstreifen zumindest teilweise doppellagig ausgeführt ist, wobei das Verstärkungselement beispielsweise mittels zumindest einer parallel zur Umschlagskante verlaufenden Naht in seiner Position fixiert ist. Hierbei ist entweder der Grundstreifen entlang der Längskante umgeschlagen, und das zumindest eine Verstärkungselement in diesem Umschlag angeordnet und beispielsweise mittels Naht fixiert, oder aber der Grundstreifen ist zur Gänze doppellagig, beispielsweise in Form eines Schlauchs gefertigt, wobei wiederum das jeweilige Verstärkungselement entlang der Faltkante angeordnet und mittels Naht fixiert ist. Die Fixierung des zumindest einen Verstärkungselementes kann jedoch auch mittels Klebung erfolgen.

In einer besonders bevorzugten Ausführung der Erfindung ist vorgesehen, dass zwei zueinander parallel verlaufende Verstärkungselemente entlang der Kante des Grundstreifens angeordnet werden, während die den Reflexstreifen fixierende Naht zwischen den beiden Verstärkungselementen geführt ist. Selbstverständlich können auch mehr als zwei Verstärkungselemente, die im wesentlichen parallel zueinander angeordnet sind, vorgesehen sein, wobei ein oder mehrere Nähte in den Rillen zwischen den Verstärkungselementen verlaufen.

Ebenso ist in einer weiteren Variante vorgesehen, dass das zumindest eine Verstärkungselement an einem Tragestreifen, insbesondere einem Webband angeordnet ist, wobei der Tragestreifen im Bereich der Kante des Grundstreifens beispielsweise mittels einer oder mehrerer Nähte befestigbar ist. Als Tragestreifen wird im Rahmen dieser Anmeldung ein insbesondere textiles Element mit zumindest einem Verstärkungselement verstanden, das als separates Element beispielsweise mittels Naht und/oder Klebung, auf dem Grundstreifen anbringbar ist. Es hat hierbei nicht notwendigerweise eine streifen- oder bandförmige Form, sondern kann auch eine andere Form aufweisen, beispielsweise kreisringförmig ausgebildet sein.

Ebenso kann vorgesehen sein, dass der Tragestreifen eine Nahtfahne und eine verdickte Endstelle aufweist oder der Tragestreifen aus beispielsweise zwei ummantelten Kordeln oder Verdickungen sowie einem Gewebestreifen dazwischen besteht. Dieser Tragestreifen wird üblicherweise im Kantenbereich des Reflexstreifens angeordnet und mittels Naht oder mehrerer Nähte fixiert.

Der Tragestreifen mit zumindest einem Verstärkungselement ist vorzugsweise aus einem die Norm EN 471 erfüllendem Material hergestellt und kann zu Kontrastzwecken unterschiedliche Farben und (Reflex)Eigenschaften aufweisen. Insbesondere sollte jedoch die Flamm- und Hitzebeständigkeit gemäß der EN 469 erfüllt sein.

Der erfindungsgemäße Reflexstreifen hat sich insbesondere in der Verwendung für Schutzbekleidung für Einsatzkräfte, bestehend aus einem Kleidungsstück aus einem vorzugsweise atmungsaktiven, reißfesten und schwer brennbaren Grundmaterial, als geeignet erwiesen, wobei der Reflexstreifen vorzugsweise schwer lösbar darauf angebracht ist.

Hierbei wird bevorzugterweise der Grundstreifen mit zumindest einer Naht im Bereich der Längskante auf dem Grundmaterial der Schutzbekleidung befestigt oder in das Grundmaterial als Einsatz eingenäht oder auf andere Weise eingearbeitet.

Es ist in einer bevorzugten Ausführung der Erfindung vorgesehen, dass die den Grundstreifen auf dem Grundmaterial befestigende Naht gleichzeitig das Verstärkungselement in seine Position parallel zur Längskante des Grundstreifens fixiert. Dadurch wird die Anzahl der Nähte und damit der einzelnen Verarbeitungsschritte bei der Fertigung der Schutzbekleidung bzw. der Anbringung von Reflexstreifen auf die Schutzbekleidung gering gehalten, wodurch die Herstellungskosten ebenfalls geringer werden.

Im Folgenden wird anhand von nicht einschränkenden Ausführungsbeispielen mit zugehörigen Figuren die Erfindung näher erläutert. Darin zeigen
- Fig. 1: eine erste Ausführung in einer perspektivischen Teilansicht,
- Fig. 2: eine zweite Ausführung in einer perspektivischen Teilansicht,
- Fig. 3: eine dritte Ausführung in einer perspektivischen Teilansicht,
- Fig. 4: eine vierte Ausführung in einer perspektivischen Teilansicht,
- Fig. 5: eine fünfte Ausführung in einer perspektivischen Teilansicht,
- Fig. 6: eine sechste Ausführung in einer perspektivischen Teilansicht,
- Fig. 7: eine siebente Ausführung in einer perspektivischen Teilansicht, und
- Fig. 8: eine achte Ausführung in einer perspektivischen Teilansicht.

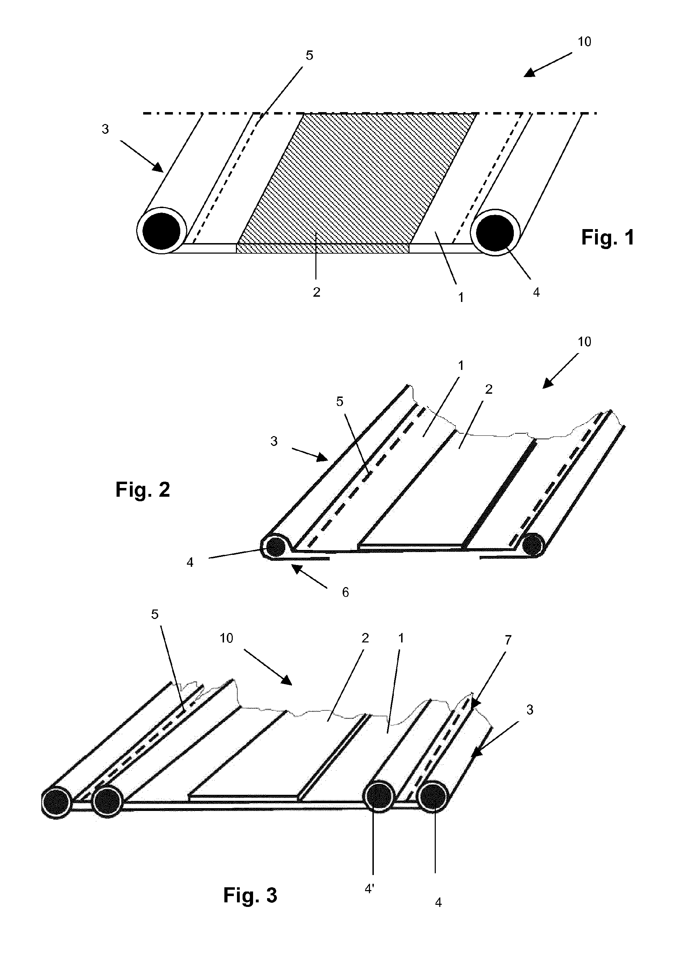

In der Fig. 1 ist der erfindungsgemäß Reflexstreifen 10 dargestellt, wobei der Reflexstreifen 10 üblicherweise als Endlosstreifen gefertigt wird. Der Reflexstreifen 10 weist einen Grundstreifen 1 auf, der bevorzugterweise aus einem schwer entflammbaren, fluoreszierenden Gewebe mit hoher Atmungsaktivität besteht. Hierbei weist das Material idealerweise die normmäßig vorgeschriebenen fluoreszierenden und/oder retroreflektierenden Eigenschaften auf. Ebenso kann der Grundstreifen 1 aus einem nicht-atmungsaktiven Material gefertigt sein, das gegebenenfalls zur Verbesserung der Atmungsaktivität gelocht ist. In diesen Grundstreifen 1 ist ein Streifen 2 aus retroreflektierendem Material eingewebt oder auf andere Art eingearbeitet.

Im Bereich der Längskanten 3 des Grundstreifens 1 sind Verstärkungselemente 4 angeordnet, die bei dieser Ausführungsform der Erfindung einen kreisrunden Querschnitt aufweisen und somit schnurartig ausgebildet sind. Hierbei sind die Verstärkungselemente 4 in das Material des Grundstreifens 1 eingewebt oder eingearbeitet. Der Grundstreifen 1 weist entlang seine Längskanten 3 jeweils eine parallel zu den Längskanten 3 verlaufende Naht 5 auf, mit deren Hilfe der Reflexstreifen 10 auf der Schutzbekleidung (nicht dargestellt) befestigt wird.

Bei der Ausführung der Erfindung gemäß Fig. 2 sind die Verstärkungselemente 4 ebenfalls im Bereich der Längskanten 3 angeordnet, wobei hier der Grundstreifen 1 mit einem aufgestickten retroreflektierenden Streifen 2 ebenfalls einlagig ausgeführt ist und im Bereich der Längskanten 3 umgeschlagen ist. In dem Umschlag 6 ist das Verstärkungselement 4 angeordnet und mittels Naht 5 in seiner Position fixiert. Alternativ oder zusätzlich kann die Fixierung des zumindest einen Verstärkungselementes 4 in dem Umschlag 6 mittels Klebung erfolgen.

Der in Fig. 3 dargestellte Reflexstreifen 10 weist in seinem Kantenbereich zwei parallel zur Längskante 3 und zueinander angeordnete Verstärkungselemente 4, 4' auf, die bei dieser Ausführungsform während der Herstellung des Grundstreifens 1 in dessen Material miteingewebt oder eingearbeitet wurden. Die hier lediglich der Befestigung des erfindungsgemäßen Reflexstreifens 10 am Untergrund, beispielsweise dem Oberstoff einer Schutzjacke, dienende Naht 5 ist somit in der durch die beiden Verstärkungselemente 4, 4' gebildete Senke 7 des Grundstreifens 1 angeordnet und dadurch besonders gut vor Umwelteinflüssen, insbesondere mechanischer Beanspruchung geschützt.

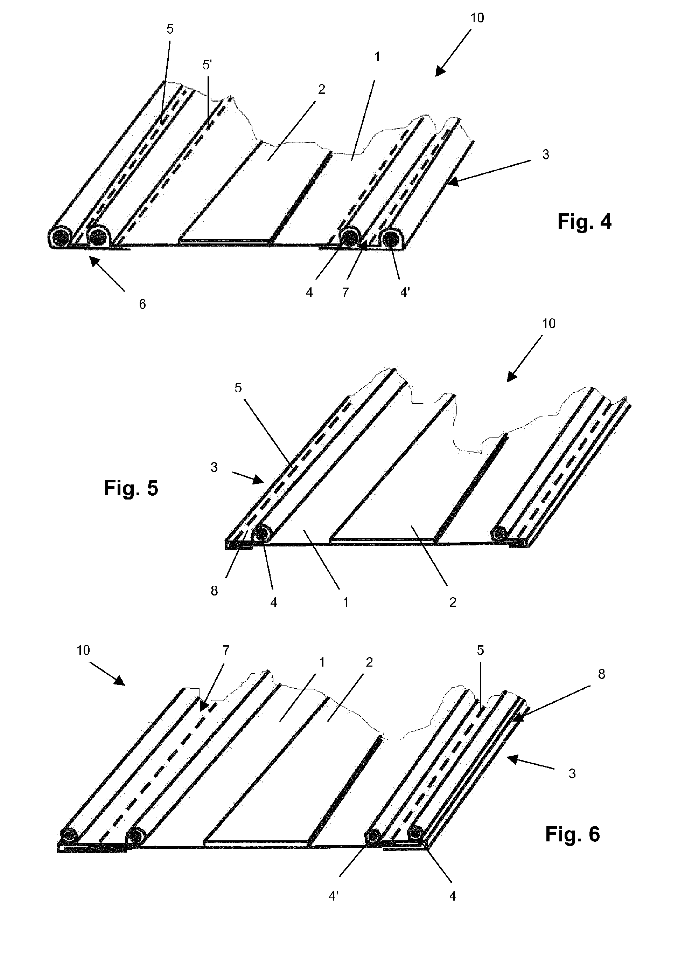

Die in der Fig. 4 gezeigte Ausführung des erfindungsgemäßen Reflexstreifens 10 weist ebenfalls zwei Verstärkungselemente 4, 4' im Bereich jeder Längskante 3 auf, die mittels zweier Nähte 5, 5' in ihrer Position fixiert sind. Der Grundstreifen 1 ist wie bei der Ausführung gemäß Fig. 2 umgeschlagen, wobei die Verstärkungselemente 4, 4' in dem Umschlag 6 angeordnet sind.

Bei dem Reflexstreifen 10 - wie in der Fig. 5 abgebildet - ist das Verstärkungselement 4 in einem Tragestreifen 8, insbesondere einem Webband eingebettet, das aus besonders reißfestem Material (vorzugsweise aus normkonformen Material nach EN 471) gefertigt ist und an die Kante 3 des Grundstreifens 1 angeordnet wird, um diese zusätzlich vor Beschädigungen zu schützen. Mittels der Naht 5 wird der Tragestreifen 8 an der Kante 3 des Grundstreifens 1 befestigt, und gegebenenfalls der Reflexstreifen 10 direkt beispielsweise mit dem Obermaterial einer Schutzjacke vernäht.

Alternativ hierzu kann vorgesehen sein, dass der Tragestreifen 8 an die Kante 3 des Grundstreifens 1 geklebt wird, und der Reflexstreifen 10 anschließend mittels der Naht 5 auf dem Grundmaterial einer Schutzbekleidung befestigt wird, wobei diese Naht 5 wiederum durch das zumindest eine Verstärkungselement 4, 4' geschützt wird.

In einer nicht eigens dargestellten Variante ist vorgesehen, dass das zumindest eine Verstärkungselement 4, 4' zwischen Tragestreifen 8 und Grundstreifen 1 im Bereich der Kante 3 lose angeordnet wird, der Tragestreifen 8 hierbei um die Kante 3 des Grundstreifens 1 umgeschlagen wird, und dieser Aufbau mittels zumindest zweier Nähte 5, 5', die auf beiden Seiten des Verstärkungselementes 4, 4' verlaufen, fixiert wird.

Die in der Fig. 6 gezeigte Ausführungsform weist einen Tragestreifen 8 mit zwei zueinander parallel angeordneten Verstärkungselementen 4, 4' auf, wobei der Tragestreifen 8 wiederum mittels Naht 5, die bei dieser Variante in einer zwischen den beiden Verstärkungselemente 4, 4' verlaufenden Senke 7 geschützt angeordnet ist, an der Kante 3 des Grundstreifens 1 fixiert wird.

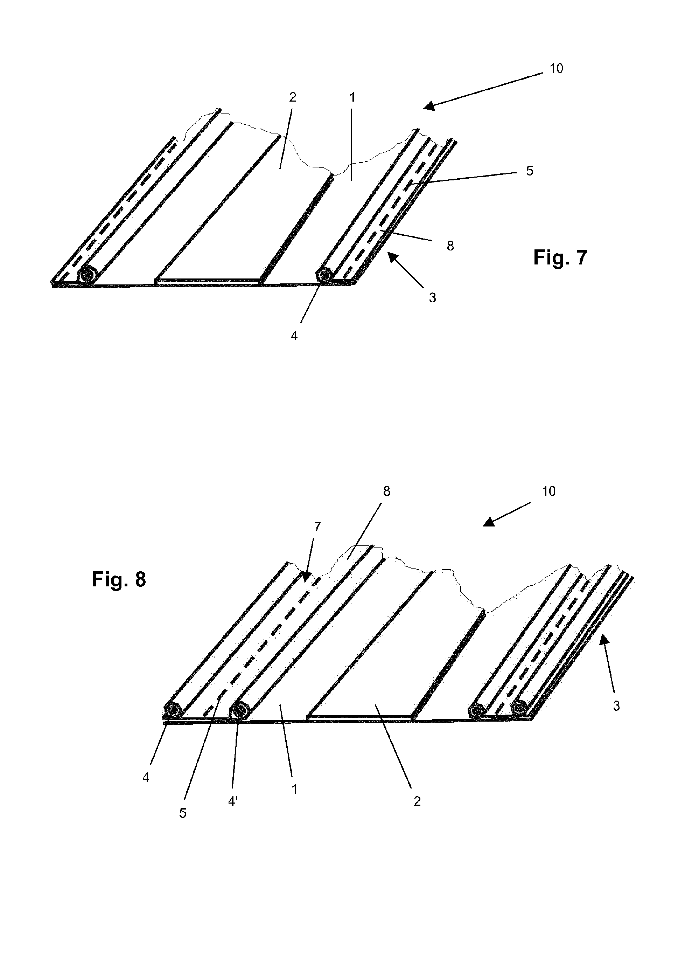

Gemäß Fig. 7 ist in einer weiteren Ausführung der Erfindung vorgesehen, dass der Tragestreifen 8 wiederum an der Kante 3 des Reflexstreifens 10 angeordnet ist, ohne um diese umgeschlagen zu sein, wobei das Verstärkungselement 4 an der der Befestigungsnaht 5 abgewandten Seite des Tragestreifens 8 angeordnet ist. Ebenso kann jedoch auch vorgesehen sein, dass das Verstärkungselement 4 zwischen Kante 3 und Naht 5 angeordnet ist.

In der Fig. 8 schließlich ist ein Tragestreifen 8 mit zwei Verstärkungselementen 4, 4' abgebildet, wobei die Befestigungsnaht 5 in der Senke 7 zwischen den Verstärkungselementen 4, 4' verläuft.

Selbstverständlich sind die oben beschriebenen Ausführungsformen nicht einschränkend zu betrachten. Insbesondere kann vorgesehen sein, dass das Verstärkungselement einen anderen Querschnitt als den beschriebenen kreisförmigen aufweist. Ebenso sind die in den Abbildungen dargestellten Nähte einfache Nähte, selbstverständlich können diese auch als Einfach- oder Mehrfachnähte mit unterschiedlichen Stichen ausgeführt sein. Grundsätzlich ist die Zahl der Verstärkungselemente, die in den Grundstreifen ein- oder aufgearbeitet sind, nicht beschränkt. Des weiteren ist nicht zwingend ein retroreflektierender Streifen, der auf dem Grundstreifen angeordnet ist, vorgesehen, es können auch einfärbige und/oder einfach reflektierende und/oder retroreflektierende Markierungen zum Einsatz kommen.

## Patentansprüche

1. Reflexstreifen (10) zum Anbringen an einem Grundmaterial, insbesondere an einer Schutzbekleidung für Einsatzkräfte, wobei der Reflexstreifen (10) einen Grundstreifen (1) aus einem schwer entflammbaren, fluoreszierendem Gewebe mit hoher Atmungsaktivität aufweist, **dadurch gekennzeichnet, dass** in dem Grundstreifen (1) zumindest in einem Teilbereich der Fläche zumindest ein Bereich, insbesondere ein Streifen (2) aus retroreflektierendem Material eingearbeitet ist.

2. Reflexstreifen (10) nach Anspruch 1, **dadurch gekennzeichnet, dass** der zumindest eine Bereich auf- oder eingewoben, ein- oder aufgestickt oder eingenäht ist.

3. Reflexstreifen (10) nach Anspruch 1 oder 2, **dadurch gekennzeichnet, dass** im Bereich zumindest einer Kante (3) des Grundstreifens (1) zumindest ein Verstärkungselement (4, 4') angeordnet ist.

4. Reflexstreifen (10) nach Anspruch 3, **dadurch gekennzeichnet, dass** das zumindest eine Verstärkungselement (4, 4') Teil des Grundstreifens (1) ist und insbesondere in Form einer Verdickung durch Verwendung stärkerer und/oder anderer Garne oder spezieller Webtechniken bei der Herstellung des Grundstreifens (1) gefertigt ist.

5. Reflexstreifen (10) nach Anspruch 3 oder 4, **dadurch gekennzeichnet, dass** das Verstärkungselement (4, 4') schnurartig ausgebildet ist.

6. Reflexstreifen (10) nach einem der Ansprüche 3 bis 5, **dadurch gekennzeichnet, dass** das zumindest eine Verstärkungselement (4, 4') in das Material des Grundstreifens (1) eingebettet, insbesondere eingewebt ist.

7. Reflexstreifen (10) nach einem der Ansprüche 3 bis 6, **dadurch gekennzeichnet, dass** das zumindest eine Verstärkungselement (4, 4') an einem Tragestreifen (8) angeordnet ist, wobei der Tragestreifen(8) im Bereich der Kante (3) des Grundstreifens (1) befestigbar ist.

8. Schutzbekleidung für Einsatzkräfte, bestehend aus einem Kleidungsstück aus einem vorzugsweise atmungsaktiven, reißfesten und schwer brennbaren Grundmaterial mit einem darauf angebrachten Reflexstreifen (10) nach einem der Ansprüche 1 bis 7.

9. Schutzbekleidung für Einsatzkräfte nach Anspruch 8, **dadurch gekennzeichnet, dass** der Grundstreifen (1) mit zumindest einer Naht (5, 5') im Bereich der Kante (3) des Grundstreifens (1) auf dem Grundmaterial der Schutzbekleidung befestigt ist oder in das Grundmaterial eingenäht oder eingearbeitet ist.

10. Schutzbekleidung für Einsatzkräfte nach Anspruch 9, **dadurch gekennzeichnet, dass** die zumindest eine Naht (5, 5') gleichzeitig das Verstärkungselement (4, 4') in seiner Position parallel zur Kante (3) des Grundstreifens (1) fixiert.
